# EUROPEAN PATENT APPLICATION

(11) **EP 0 629 431 A1**
(43) Date of publication of application: **21.12.1994**
(21) Application number: 94850105.1
(22) Date of filing: 15.06.1994
(51) Int. Cl.: B01D 53/34, B01D 53/02

(54) **A method for extracting gaseous contaminants from a gas, and apparatus therefore**

(30) Priority: 18.06.1993 SE 9302111
(71) Applicant: BOLIDEN CONTECH AB, S-100 31 Stockholm (SE)
(72) Inventor: Edlund, Herman A.F., S-126 70 Hägersten (SE)
(74) Representative: Lundin, Björn-Eric

(57) **Abstract**

A method for extracting gaseous contaminants in the form of mercury and toxic, organic compounds, such as dioxins, furans and the like, from a gas. The method is characterized by first passing the gas through a first filter substance having selenium as an active ingredient, so as to take-up essentially all mercury. The essentially mercury-free gas is then passed through a second filter substance which is able to take-up toxic organic compounds and which can be destroyed or regenerated by combustion. The inventive filter arrangement includes a first filter substance having selenium as its active ingredient. This first filter substance is disposed upstream of a second filter substance which is capable of adsorbing or absorbing toxic, gaseous organic compounds, such as dioxins and furans.

## Description

The present invention relates to a method for extracting gaseous contaminants in the form of mercury and toxic, organic compounds, such as dioxins, furans and the like, from a gas, and also to a filter arrangement for carrying out the method.

It is known to extract gaseous mercury with the aid of a filter substance that contains or consists of selenium, selenium sulphide or other selenium compounds or mixtures thereof as the active ingredient. A filter which is based on this filter substance is normally referred to in practice as a "selenium filter". A selenium filter and a method for its manufacture are described, for instance, in US-A-3,786,619, and degrees of extraction or separation close to 100% can be achieved. A filter of this kind can be used generally and is particularly suitable for use when the mercury concentrations in the gases to be purified are relatively low to extremely low. One of the most important advantages obtained with such a filter is that when mercury binds to the selenium, there is formed a particularly stable compound, mercury selenide, HgSe, which can be dumped without risk of mercury being released either to atmosphere or into aqueous solutions. By way of an example of the stability of HgSe, it can be mentioned that about 300,000 m³ water, corresponding to the water content of about seventy-five 50-metre swimming pools, is required to release one single atom of mercury from one spoonful of solid HgSe.

It has long been known that gaseous mercury can be taken-up with a filter substance comprised of active carbon with different additives (so-called carbon filters), for instance alkali sulphide and sulphur, wherein the sulphur can be supplied dissolved in carbosulphide, or by treating the carbon with SO₂ or H₂S, so as to form intercapillary precipitated sulphur, as described in DE-B-2,150,592. One serious drawback with carbon filters, however, resides in the handling of the mercury-full filters. One method of handling such filters is described in the aforesaid publication DE-B-2,150,592, in which the mercury is recovered by thermal distillation. This handling process, however, presents serious environmental problems, particularly with regard to the present-day strict requirements regarding mercury emissions. It is therefore necessary in practice to dump the carbon filters in the form of environ-mentally harmful mercury waste. As distinct from selenium filters, however, the mercury is not bound equally as effectively in carbon filters, since in carbon filters the mercury is taken-up essentially in the form of sulphide, which is less stable than selenide, and it is also possible that the mercury absorbed by the carbon will be bound relatively loosely. However, since carbon filters are also able to absorb effectively such gaseous organic compounds as dioxins, furans and the like, the carbon filter has often been chosen in recent times for separating mercury from gases in which such toxic organic compounds are also present. Such filters, however, present serious destruction or dumping problems and, in certain cases, the requirements placed by the appropriate authorities on the use of carbon filters for such gas purification purposes are so strict as to render such use impossible in practice. The reasons for this are because the filters cannot be dumped without the risk of absorbed dioxins being released to the recipient. Neither can the filters be regenerated by thermal distillation, among other things for the reasons mentioned above. Furthermore, further problems arise when treating the filters thermally, because of their dioxin content. Neither can the filters be destroyed by combustion, since problems then arise with the elementary mercury that is reformed by oxidation.

Growing demands are made at the present time for methods of handling gases that derive from different combustion sources with which there is a risk of the formation of toxic organic compounds which are fully acceptable from an environmental aspect, these demands excluding any form of mercury discharge to the environment. One relevant example in this regard is found in the combustion gases from crematoriums, which contribute greatly to mercury emissions by the release of the mercury content of amalgam dental fillings in the cremation process. There is also the risk of dioxin generation from the synthetic materials now frequently used in coffins, and from the textile furnishings used. These synthetic materials are liable to contain chloric substances, which greatly contributes to dioxin generation. Consequently, carbon filters have been preferred to selenium filters for purifying gases of this nature, because of the ability of the carbon filter to also take-up the dioxin content of the gases, therewith resulting in the more serious dumping or destruction problems described in the introduction.

There is thus required a method of handling gases, for instance gases generated by the combustion of organic waste, which is completely unassailable from a total environmental aspect and by means of which the mercury and organic, toxic compounds taken-up can be dealt with without further danger to the environment. An object of the present invention is to provide a method and apparatus by means of which the aforesaid environmental problems can be avoided. To this end, the inventive method and inventive apparatus are characterized by the method steps and features set forth in the following method and apparatus Claims.

The inventive method comprises passing the gas to be purified or cleansed through a first filter substance that contains selenium as its active ingredient, so as to extract essentially all mercury from the gas. This essentially mercury-free gas is then passed through a second filter substance capable of extracting toxic organic compounds. This second filter substance can be destroyed or regenerated by combustion. Preferably, the active ingredient of the second filter substance will be active carbon, although paraffin, fat (grease) or oil can be used advantageously in some cases. All of these filter substances can be burned and therewith destroyed together with the organic compounds taken-up therein. It may also be convenient in some cases to use zeolite as the second filter substance. Although zeolite is not combustible, it is able to withstand the high combustion temperatures required to expel and destroy its organic substance content.

The temperature of the gas to be purified may vary between 20 and about 400°C, and the gas may be dry or moist. When the gas is moist and water is liable to condense onto the filter substances, the gas may conveniently be heated to a temperature above the gas dew point, at least prior to passing through the second filter substance.

The inventive filter arrangement comprises a first filter substance with selenium as the active ingredient. This first filter substance is located upstream of a second filter substance which is able to adsorb or absorb toxic, gaseous organic compounds such as dioxins and furans.

The filter arrangement may be constructed in the form of a column or a vertically extending column-like container having at least two horizontally arranged bottoms or plates which support the filter substances used. An important advantage afforded by this design is that each bottom or plate can be made separately exchangeable, therewith enabling used filter substances to be removed and dealt with and the filter arrangement to be replenished with fresh filter substances without needing to dismantle the entire filter. It will be obvious from this that the spent selenium-filter substance can be dumped separately in an environmentally friendly fashion, while the second filter substance can be burned or regenerated by combustion separately, and that this second filter substance containing organic compounds may, for instance, be returned to the combustion process from which the gas originates, without risk of the emission of environmentally harmful contaminants.

The filter arrangement may alternatively have the form of a cylindrical container which includes vertically disposed, mutually coaxial spaces that contain the filter substances used. A filter of this kind is used at present time to a very large extent as a selenium filter, since it can be easily handled. It can, however, be readily modified for two different filter substances in accordance with the invention, and is particularly useful in the case of low mercury concentrations in the gases concerned, with which the filter can be used over long periods of time without becoming saturated.

It may be convenient in some cases to provide the filter arrangement with a gas heating unit upstream of that part of the arrangement in which the second filter substance is accommodated. The filter arrangement may also be provided with measuring outlets by means of which the extent of the load on the filter substances can be monitored.

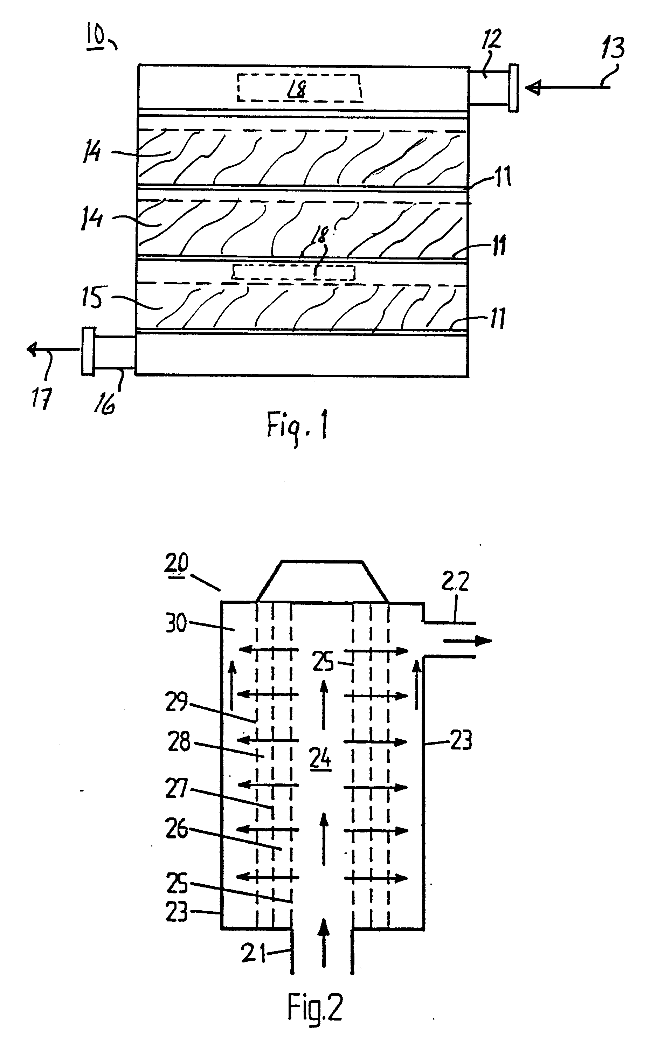

The invention will now be described in more detail with reference to the accompanying drawing, in which Figure 1 is a schematic, sectioned side view of a preferred filter arrangement; and Figure 2 is a similar schematic view of another preferred filter arrangement constructed in accordance with the invention.

Figure 1 shows a filter arrangement 10 which includes three horizontal bottoms 11. The upper part of the filter arrangement includes a contaminated gas inlet 12, into which gas flows as indicated by the arrow 13. Beds 14 of a filter substance in which selenium is the active ingredient are disposed on the two uppermost bottoms 11, whereas a bed 15 of filter substance in which active carbon is the active ingredient is disposed on the lowermost bottom 11. It will be understood that this latter bed may alternatively be comprised of some other filter substance that can be destroyed or regenerated by combustion.

Provided in the lower part of the filter arrangement 10 is a gas outlet 16 through which purified gas is removed from the arrangement, as indicated by the arrow 17. The filter arrangement 10 may also be equipped with one or more gas heaters, as indicated in broken lines.

When using the filter arrangement 10, the arrangement is connected to a conduit for incoming gas 13, this gas suitably having been freed from dust, and the gas is caused to pass down through firstly the two selenium beds 14, wherein essentially all of the metallic mercury contained in the gas is taken-up by the filter substance and bound as HgSe. Before entering the carbon bed 15, the mercury-freed gas is optionally heated to a temperature above its dew point, by the gas heater 18. The gas is freed in the carbon bed 15 from its possible content of dioxins, furans and other similar toxic organic compounds, whereafter the thus purified gas is allowed to flow out through the gas outlet 16 and is passed to a smokestack or directly to the surroundings, as indicated by the arrow 17.

Figure 2 illustrates a cylindrical, vertically disposed filter 20 which has a bottom centrally disposed gas inlet 21 and a gas outlet 22 provided at the top of the filter. The filter 20 has an outer wall 23 of circular cross-section. Provided in the filter 20 is a cylindrical space 24 which is delimited radially outwards by a gas-permeable partition wall 25, outside of which there is provided a second space 26 which is delimited radially outwards by a second partition wall 27. Radially outwards of the partition wall 27 is a third space 28 which is delimited radially outwards by a third partition wall 29. A fourth space 30 is delimited by the outer wall 23 and the partition wall 29. The inner space 24 may be filled at least partially with material for extracting particles from the gas treated in the filter. The space 26 delimited radially outwards of the inner space 24 is filled with a filter substance having selenium as the active ingredient, for taking-up mercury as mercury selenide. The space 28 delimited, or defined, by the partition walls 27, 29 is filled with a filter substance having active carbon as its active ingredient, for taking-up dioxins, furans and like organic contaminants, while the space 30 located radially outwards of the space 28 is empty. When the filter 20 is used, the gas to be purified is introduced into the filter through the gas inlet 21 provided in the centre of the bottom part of the filter, and is caused to pass through the space 26 in which essentially all mercury is extracted from the gas, and then through the space 28 in which dioxin is extracted from the gas, prior to the gas passing through the space 30 and into the gas outlet 22 and from there to a recipient, as indicated by the horizontal arrow pointing to the right in the Figure. When the filter 20 is unable to take-up more mercury or dioxins, the spent filter is replaced with a fresh filter and the spent filter 20 is dismantled and the various filter substances removed separately for dumping and destruction respectively, in accordance with the procedure described above.

The inventive method and the inventive filter arrangement thus enable both mercury and dioxins and similar toxic contaminants contained in combustion gases or other similar gases to be dealt with effectively. Several important advantages are obtained in comparison with the use of solely carbon filters:
* The consumed active carbon can be burned, wherein the organic compounds are broken down without creating the problem of mercury release.
* This represents a saving in dump volumes and therewith in dump costs.
* The selenium filter substance is the only substance that needs to be dumped, which in comparison with carbon filters represents much smaller volumes.
* There are no emission problems caused by the leakage of mercury from dumped material.

## Claims

1. A method for extracting gaseous contaminants in the form of mercury and toxic, organic compounds such as dioxins, furans and the like from a gas, **characterized** by first passing the gas through a first filter substance which contains selenium as an active ingredient, so as to extract essentially all mercury from the gas; passing the gas that has been freed essentially from mercury through a second filter substance capable of taking-up toxic organic compounds, wherein the second filter substance can be destroyed or regenerated by combustion.

2. A method according to Claim 1, **characterized** in that the second filter substance has active carbon as an active ingredient.

3. A method according to Claim 1, **characterized** in that the second filter substance has zeolite as an active ingredient.

4. A method according to Claim 1, **characterized** in that the second filter substance has paraffin, fat (grease) or oil as an active ingredient.

5. A method according to Claims 1-4, **characterized** by heating the gas to a temperature higher than the gas dew point, prior to passing the gas through the second filter substance.

6. A filter arrangement for carrying out the method according to Claims 1-5, **characterized** by a first filter substance which has selenium as its active ingredient, this filter substance being disposed upstream of a second filter substance which is capable of adsorbing or absorbing toxic, gaseous organic compounds, such as dioxins or furans.

7. A filter arrangement according to Claim 6, **characterized** by a column or column-like, vertically arranged container having at least two horizontally disposed bottoms or plates which support the filter substances used.

8. A filter arrangement according to Claim 6, **characterized** by a cylindrical container having vertically extending and mutually coaxial spaces which accommodate the filter substances used.

9. A filter arrangement according to Claims 6-8, **characterized** by a gas heating unit which is mounted upstream of that part of the arrangement in which the second filter substance is accommodated, as seen in the flow direction of the gas.

10. A filter arrangement according to Claims 6-9, **characterized** by a measuring outlet for monitoring the extent to which the filter substances are loaded.
